# EUROPEAN PATENT APPLICATION

(11) **EP 2 048 393 A2**
(43) Date of publication of application: **15.04.2009**
(21) Application number: 08164697.8
(22) Date of filing: 19.09.2008
(51) Int. Cl.: F16D 3/02

(54) **"Rotary shaft coupling"**

(30) Priority: 05.10.2007 JP 2007262439
(71) Applicant: Enplas Corporation, Kawaguchi-shi, Saitama 332-0034 (JP)
(72) Inventor: Kajiwara, Yasushi, c/o Enplas Corporation, Saitama Saitama 332-0034 (JP); Suzuki, Yasuhiro, c/o Enplas Corporation, Saitama Saitama 332-0034 (JP)
(74) Representative: McIlroy, Steven David

(57) **Abstract**

A rotary shaft coupling is provided that can accurately transmit rotation of one rotation axis to another rotation axis even when shaft core misalignment is present between the rotation axes, and has superior durability, without generating noise.

In a rotary shaft coupling 1 including a pair of joint halves 2a and 2b that are respectively attached to opposing axial end sections 12a and 12b and transmit rotation of one axis 11a to another axis 11b, outer teeth 6a of a gear are provided on one joint half 2a and inner teeth 6b that mesh with the outer teeth 6a and have a same number of teeth as the outer teeth 6a are provided on the other joint half 2b. Each outer tooth 6a and each inner tooth 6b are formed to absorb shaft core misalignment between both axes 11a and 11b and perform rotation transmission by having an involuted tooth profile of a same module and a tooth flank of the involuted tooth profile displaced in a circumferential direction.

## Description

### BACKGROUND OF THE INVENTION

### 1. Field of the Invention

The present invention relates to a rotary shaft coupling. In particular, the present invention relates to a rotary shaft coupling that is suitable for transmitting rotation between rotational axes disposed such that axial ends oppose each other.

### 2. Description of the Related Art

In general, a rotary shaft coupling is used to smoothly transmit rotation between rotational axes of which shaft cores may be opposing each other in a misaligned state.

Conventionally, there is a rotary shaft coupling that uses flexible joints. However, the rotary shaft coupling using flexible joints has disadvantages such as having a large number of components, being heavy, rotational unevenness during rotation transmission, and being high in manufacturing cost.

Therefore, a following rotary shaft coupling is proposed (refer to, for example, Patent Literature 1). The rotary shaft coupling has a pair of joints having a same shape. In each joint, a concave and convex section is evenly disposed on an outer circumference of a disc-shaped seat. A rotational axis is fixed onto a center of the disc-shaped seat. The pair of joints mesh with each other such that the concave and convex sections oppose each other with matching phases.

Patent Literature 1: Japanese Patent Laid-open Publication No. Heisei 10-331860

However, in the rotary shaft coupling disclosed in Patent Literature 1, the concave and convex sections are shaped and positioned such that the joints mesh with each other with adequate clearance therebetween to absorb shaft core misalignment between the axes.

However, because the clearance is provided between meshing concave and convex sections, when a rotation transmission speed changes at a start or end of rotation, the concave and convex sections reciprocate plural times in a circumferential direction and collide. Therefore, a collision noise is generated, causing a loud noise. The concave and convex section is formed such that a tip section of a cylinder is alternately cut on a vertical direction cutting plane extending in a radial direction and a horizontal direction cutting plane extending in a circumferential direction that connects two adjacent vertical direction cutting planes. Therefore, because the concave and convex sections mesh with each other at the planar vertical direction cutting plane, when the shaft cores are misaligned, the concave and convex sections meshing at a plurality of areas lock during rotation, when the clearance is small. The rotation is not transmitted smoothly, and rotational unevenness occurs. On the other hand, when the clearance is large, impact force increases. The generated noise becomes louder. Moreover, when the clearance is large, a circumferential direction length of a convex section of the concave and convex section shortens, and strength of the convex section weakens. Durability deteriorates.

### SUMMARY OF THE INVENTION

The present invention has been achieved in light of the above-described problems. An object of the present invention is to provide a rotary shaft coupling that can accurately transmit rotation of one rotational axis to another rotational axis and has excellent durability, without generating noise.

To achieve the above-described object, a rotary shaft coupling according to a first aspect of the present invention is a rotary shaft coupling including a pair of joint halves that are respectively attached to opposing axial end sections and transmit rotation of one axis to another axis. In the rotary shaft coupling, outer teeth of a gear are provided on one joint half. Inner teeth that mesh with the outer teeth and have a same number of teeth as the outer teeth are provided on the other joint half. The outer teeth and the inner teeth are formed to absorb shaft core misalignment between both axes and perform rotation transmission by having an involuted tooth profile of a same module and a tooth flank of the involuted tooth profile displaced in either one of a tangential line direction and a radial direction, or both.

In the present invention configured as described above, the outer teeth and the inner teeth, formed having an involuted tooth profile of a same module and a tooth flank of the involuted tooth profile displaced in a circumferential direction, always successfully mesh. Therefore, even when shaft core misalignment is present between rotation axes, the rotation of one rotation axis can be accurately transmitted to the other rotation axis. Durability can be increased without noise being generated.

In the rotary shaft coupling according to a second aspect, the shaft core misalignment is one of an axial misalignment in a parallel direction of axial centers of both axes and angular misalignment in a relative angular direction of the axial centers of both axes, or both.

In the present invention configured as described above, the rotation can be successfully transmitted in a similar manner as that according to the first aspect, even when shaft core misalignment that is one of an axial misalignment in a parallel direction of axial centers of both axes and angular misalignment in a relative angular direction of the axial centers of both axes, or both, occurs.

In the rotary shaft coupling according to a third aspect, a meshing ratio between the outer teeth and the inner teeth is one or more.

In the present invention configured as described above, the outer teeth and the inner teeth always successfully mesh with more certainty. Therefore, rotation transmission can be performed without rotation unevenness. Moreover, rotation transmission torque can be increased.

In the rotary shaft coupling according to a fourth aspect, a number of teeth of the outer teeth and the inner teeth are six teeth to eight teeth.

In the present invention configured as described above, rigidity of the outer teeth and the inner teeth can be kept high, and rotation transmission can be performed smoothly.

In the rotary shaft coupling according to a fifth aspect, a spring is attached that applied elastic force rotating the both joint halves in opposite directions.

In the present invention configured as described above, the outer teeth and the inner teeth can always mesh.

In the rotary shaft coupling according to a sixth aspect, a ring-shaped elastic body is attached to outer circumferential surfaces of the outer teeth and the inner teeth.

In the present invention configured as described above, separation of the outer teeth and the inner teeth can be prevented by elasticity of the elastic body in the circumferential direction, and the outer teeth and the inner teeth can always mesh.

In the rotary shaft coupling according to a seventh aspect, the ring-shaped elastic body is a rubber cover or an O-ring sealing an outer circumferential section of a meshing section of the pair of joint halves.

In the present invention configured as described above, an area between the joint halves can be sealed through use of the rubber cover that seals the outer circumferential sections of the joint halves. Dust-control and sound-proofing can be achieved. A commercially-available, general-purpose O-ring can be used when the O-ring is used, thereby lowering cost.

In the rotary shaft coupling according to an eighth aspect, an air-tight space formed on an inner side of the rubber cover is filled with grease.

In the present invention configured as described above, rotation transmission can be made smoother by the grease, and wear in the outer teeth and the inner teeth can be prevented.

### EFFECT OF THE INVENTION

The rotary shaft coupling of the present invention is configured and operated as described above. Therefore, even when shaft core misalignment is present between rotation axes, rotation from one rotation axis can be accurately transmitted to another rotation axis. Superior effects, such as increased durability, can be achieved without noise being generated.

### BRIEF DESCRIPTION OF THE DRAWINGS

Fig. 1 is an exploded perspective view of a rotary shaft coupling according to a first embodiment of the present invention;
Fig. 2 is a perspective view of a meshing relationship between outer teeth and inner teeth according to the first embodiment shown in Fig. 1;
Fig. 3 is diagrams of a joint half including the outer teeth according to the first embodiment shown in Fig. 1, in which (a) is a front view, (b) is a cross-sectional view, and (c) is a rear view;
Fig. 4 is diagrams of a joint half including the inner teeth, in which (a) is a front view, (b) is a cross-sectional view, and (c) is a rear view;
Fig. 5 is diagrams of a rotary shaft coupling according to a second embodiment of the present invention, the diagrams being similar to Fig. 3;
Fig. 6 is diagram of a joint half that meshes with a joint half in Fig. 5, the diagrams being similar to Fig. 4;
Fig. 7 is diagrams of a rotary shaft coupling according to a third embodiment of the present invention, the diagrams being similar to Fig. 3;
Fig. 8 is diagram of a joint half that meshes with a joint half in Fig. 7, the diagrams being similar to Fig. 4;
Fig. 9 is a cross-sectional view of a state in which the joint halves shown in Fig. 7 and Fig. 8 are meshed;
Fig. 10(a) to Fig. 10 (g) are explanatory diagrams of changes in a meshing state of outer teeth and inner teeth of the joint halves shown in Fig. 7 and Fig. 8:
Fig. 11 is a front view of a rotary shaft coupling to which a spring is attached, according to a fourth embodiment of the present invention;
Fig. 12 is a diagram of a rotary shaft coupling to which a spring is attached, according to another embodiment of the present invention, the diagram being similar to Fig. 11;
Fig. 13 is diagrams of a rotary shaft coupling to which a rubber cover is attached, according to a fifth embodiment, in which (a) is a cross-sectional view in a concentric state, (b) is a cross-sectional view in an angular misalignment state, and (c) is a cross-sectional view in an axial misalignment state;
Fig. 14 is a diagram of a rotary shaft coupling to which an O-ring is attached, according to another embodiment, the diagram being similar to Fig. 13; and
Fig. 15 is a cross-sectional view of a state in which the rotary shaft coupling of the present invention is applied.

### EXPLANATION OF THE REFERENCE NUMERALS

### DETAILED DESCRIPTION OF THE PREFERRED EMBODIMENT

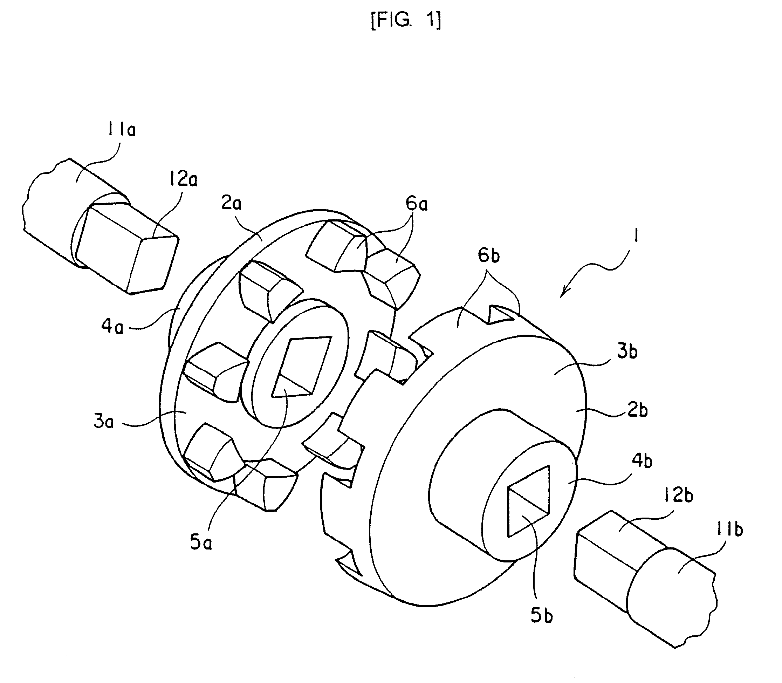

Embodiments of a rotary shaft coupling of the present invention will be described in detail, below, with reference to Fig. 1 to Fig. 15.

Fig. 1 to Fig. 4 are diagrams of a rotary shaft coupling according to a first embodiment of the present invention.

As shown in the diagrams, a rotary shaft coupling 1 according to the first embodiment includes a pair of joint halves, a joint half 2a and a joint half 2b, that are respectively attached to ends of opposing rotation axis 11a and rotation axis 11b. The pair of joint halves 2a and 2b transmit rotation of one axis to the other axis. The rotary shaft coupling 1 is formed having a gear with eight teeth.

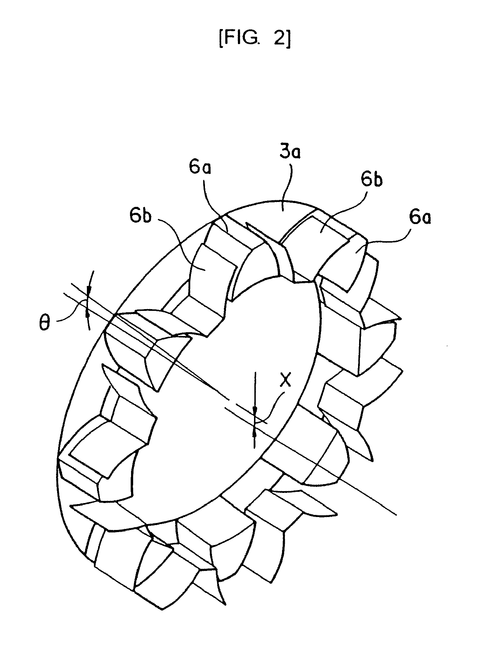

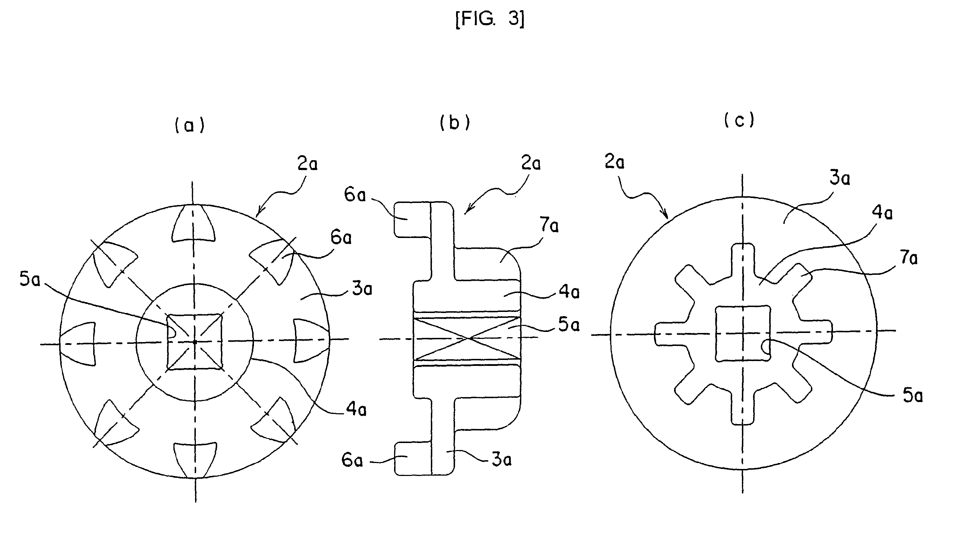

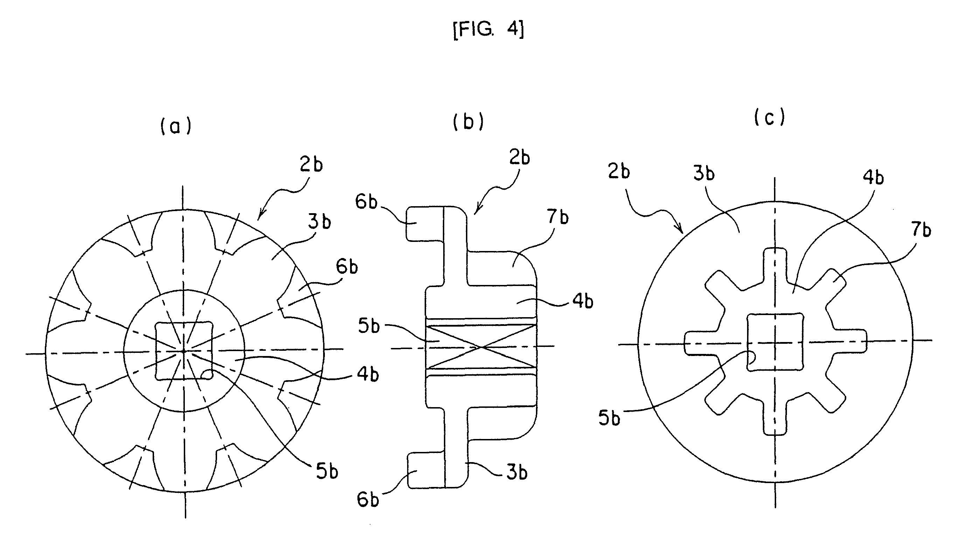

Specifically, in the joint half 2a, a boss section 4a is formed in a center of a disc-shaped main body 3a. A center hole 5a having a rectangular cross-section is formed on the boss section 4a. The center hole 5a fits with an axial end section 12a of a rotation axis 11a in a serrated manner. The axial end section 12a has a rectangular cross-section. In the joint half 2b, a boss section 4b is formed in a center of a disc-shaped main body 3b. A center hole 5b having a rectangular cross-section is formed on the boss section 4b. The center hole 5b fits with an axial end section 12b of a rotation axis 11b in a serrated manner. The axial end section 12b has a rectangular cross-section. Outer teeth 6a of a gear having eight teeth are provided on one surface of opposing surfaces of the main body 3a of the joint half 2a and the main body 3b of the joint half 3b. Inner teeth 6b of a gear having the same number of teeth as the outer teeth 6a are provided on the other surface. The inner teeth 6b mesh with the outer teeth 6a. The outer teeth 6a and the inner teeth 6b each have an involuted tooth profile of a same module. The outer teeth 6a and the inner teeth 6b are formed such that a tooth flank of the involuted tooth profile is displaced in either one of a tangential line direction and a radial direction, or both. Here, displacement in the radial direction is also referred to as a vertical displacement. The teeth are cut and formed by a rack cutter that performs gear cutting displacing an axis of the gear further in the radial direction from a prescribed depth. Displacement in the tangential line direction is also referred to as a horizontal displacement. The teeth are cut and formed by the rack cutter that performs gear cutting being displaced in a line direction of a cutter center line. As a result, the outer teeth 6a and the inner teeth 6b can be formed such that misalignment of shaft cores of both rotation axis 11a and rotation axis 11b is absorbed and rotation transmission is performed. The misalignment of the shaft core described herein refers to one of an axial misalignment x in the radial direction of the axial centers of both rotation axis 11a and rotation axis 11b and an angular misalignment θ in a relative angular direction of the axial centers of both rotation axis 11a and rotation axis 11b, or both, as shown in Fig. 2. The outer teeth 6a and the inner teeth 6b are formed such that rotation transmission can be performed without rotation unevenness by both outer teeth 6a and inner teeth 6b always favorably meshing with certainty, with a mutual contact ratio of one or more. Moreover, rotation transmission torque can be increased. As shown in Fig. 3 and Fig. 4, eight reinforcement ribs 7a are formed on an outer circumferential surface of the boss section 4a at positions having the same phase as the outer teeth 6a. Eight reinforcement ribs 7b are formed on an outer circumferential surface of the boss section 4b at positions having the same phase as the inner teeth 6b. The outer teeth 6a and the inner teeth 6b can be integrally formed using resin. The resin is merely required to have superior moldability and rigidity. For example, the resin preferably has characteristics that support stress, slidability, abrasion-resistance, durability, thermal environment, usage frequency, and the like required based on where the outer teeth 6a and the inner teeth 6b are attached on the rotary shaft coupling 1.

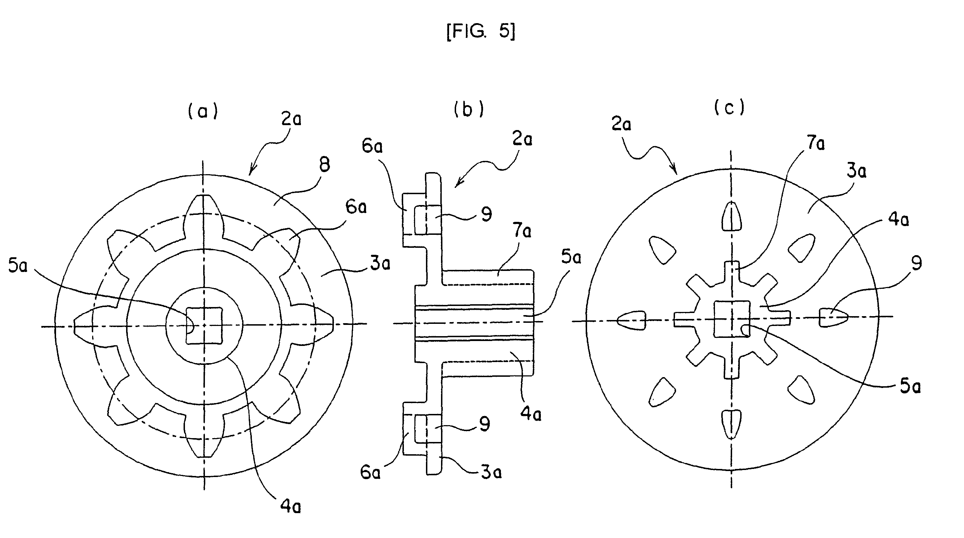

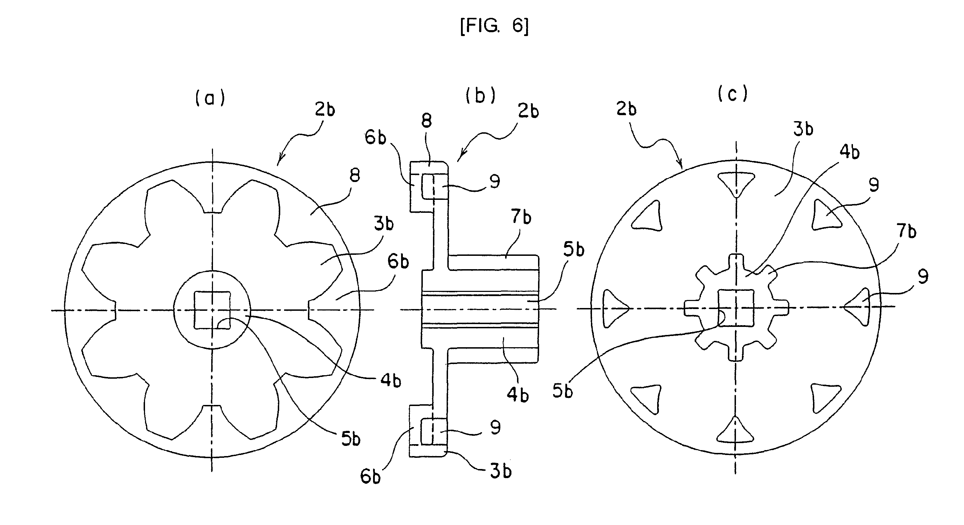

Fig. 5 and Fig. 6 show a gear form having eight teeth according to another embodiment (second embodiment). An outer circumferential section of the inner teeth 6b is connected by a cylindrical outer cover 8, thereby reinforcing strength. Lightening cuts 9 are formed on opposite sides of the outer teeth 6a and the inner teeth 6b to reduce weight and improve dimensional accuracy. Other configurations are similar to that according to the first embodiment shown in Fig. 1.

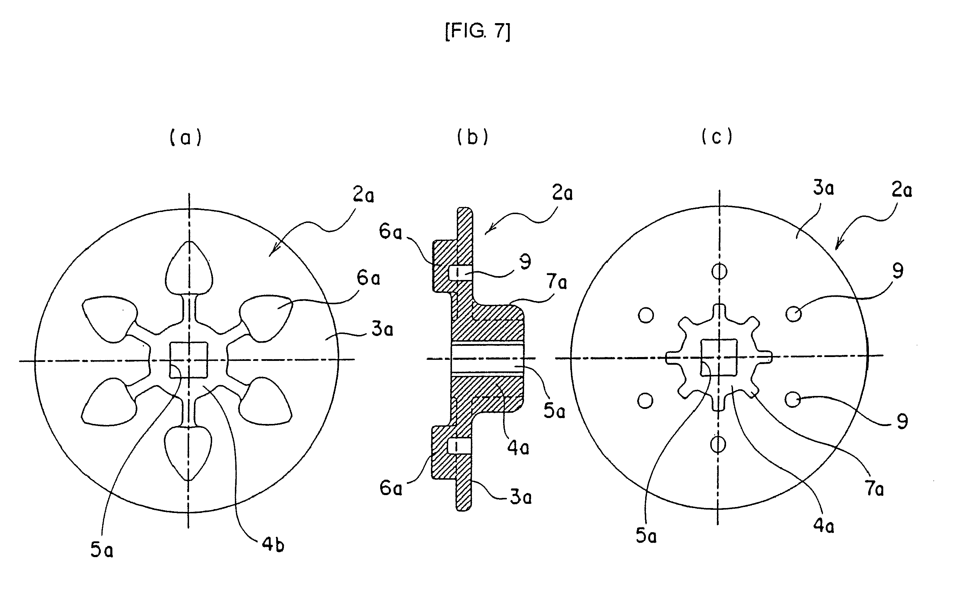

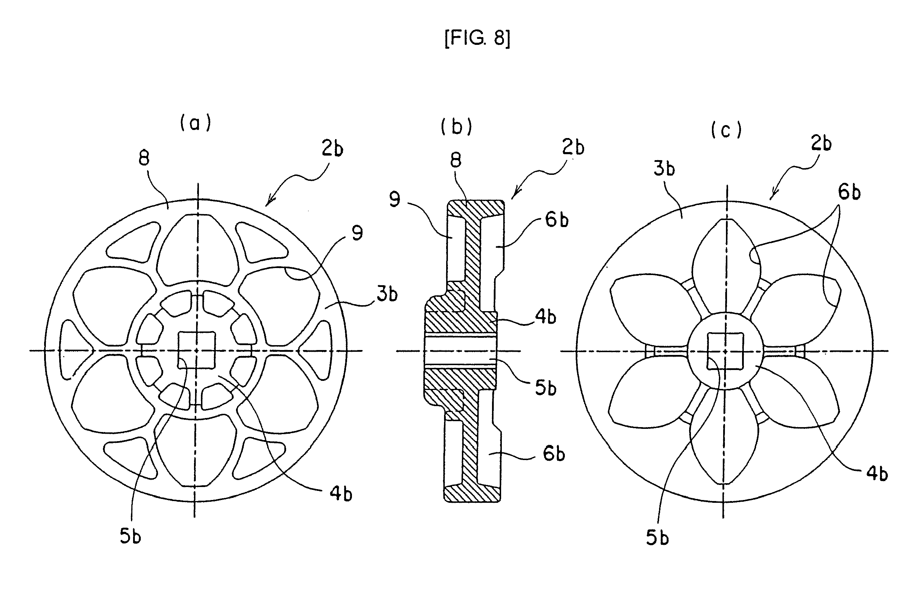

Fig. 7 and Fig. 8 show a gear form having six teeth according to another embodiment (third embodiment). The outer teeth 6a are formed connected to the boss section 4a and projecting from the main body 3a. The inner teeth 6b are formed by lightening cuts being made on the main body 3b from the boss section 4b section. Several lightening cuts 9 are also formed in required areas. Other configurations are similar to that according to the embodiment shown in Fig. 5 and Fig. 6.

Next, operations according to the embodiment will be described.

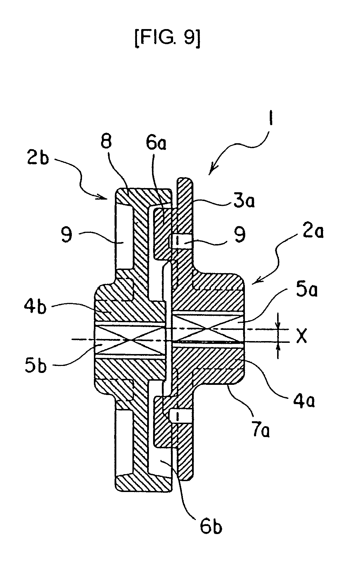

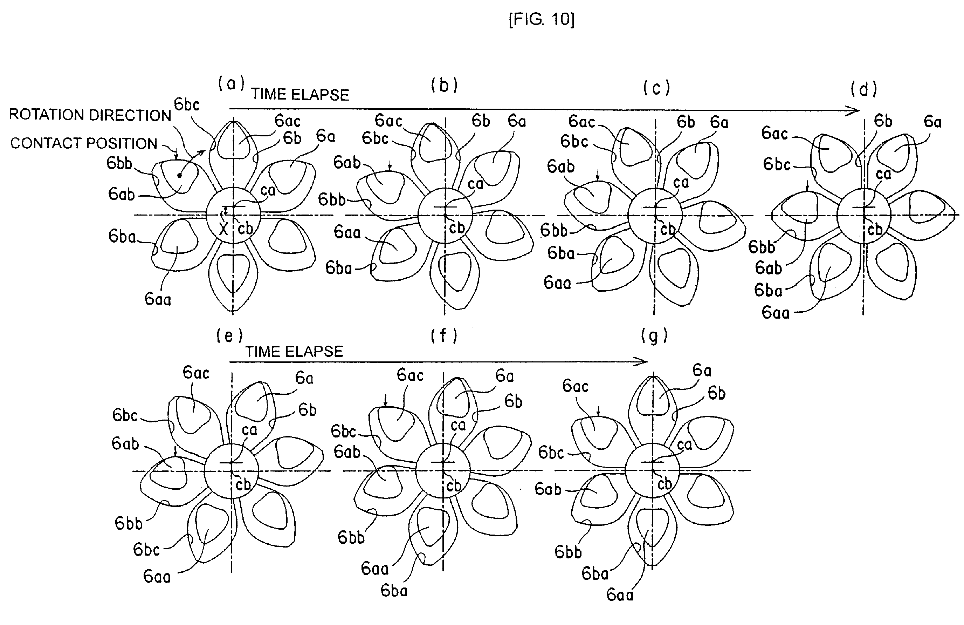

A meshing state between the outer teeth 6a and the inner teeth 6b will be described with reference to Fig. 9 and Fig. 10 showing the rotary shaft coupling 1 having a six-tooth gear form (third embodiment). The joint half 2a and the joint half 2b of the rotary shaft coupling 1 according to the embodiment (third embodiment) in which the gear form has six teeth mesh and transmit rotation as shown in Fig. 9. Fig. 9 shows a state in which an axial misalignment x occurs between the outer teeth 6a and the inner teeth 6b.

Fig. 10 shows a state in which an axial misalignment x occurs between a center ca of the outer teeth 6a and a center cb of the inner teeth 6b over time (a to g in Fig. 10), when the inner teeth 6b rotates in a counter-clockwise direction and transmits the rotation to the outer teeth 6a.

In an initial phase of rotation in Fig. 10 (a), the outer teeth 6a and the inner teeth 6b mesh in two pairs: a pair including an outer tooth 6aa and an inner tooth 6ba (lower left) and a pair including an outer tooth 6ab and an inner tooth 6bb (upper left). Although, as the rotation progresses, the pair including the outer tooth 6aa and the inner tooth 6ba, and the pair including the outer tooth 6ab and the inner tooth 6bb still mesh in Fig. 10(b), when the rotation further progresses in the counter-clockwise direction, the pair including the outer tooth 6aa and the inner tooth 6ba separate, as shown in Fig. 10(c). Two pairs, the pair including the outer tooth 6ab and the inner tooth 6bb, and a pair including an outer tooth 6ac and an inner tooth 6bc on a rotational direction downstream side, mesh. Subsequently, the rotation progresses to a phase shown in Fig. 10(a), while the pair including the outer tooth 6ab and the inner tooth 6bb and the pair including the outer tooth 6ac and the inner tooth 6bc remain meshing from Fig. 10(c) to Fig. 10(g). Subsequent rotations are performed in a similar manner. When an angular misalignment θ is present, the rotation is transmitted in a similar manner as when the axial misalignment x is present in Fig. 10. When the inner teeth 6b rotate in the clockwise direction, the rotation is appropriately transmitted in a similar manner. Moreover, the outer teeth 6a can be the driving side and the inner teeth 6b can be the driven side.

As described above, in the rotary shaft coupling 1 according to the embodiment, the outer teeth 6a and the inner teeth 6b each have an involuted tooth profile of the same module. The outer teeth 6a and the inner teeth 6b are formed such that the tooth flank of the involuted tooth profile is displaced in either one of the tangential line direction and the radial direction, or both. Therefore, the rotation can be transmitted with rotational transmission error by the outer teeth 6a and the inner teeth 6b theoretically at zero. The outer teeth 6a and the inner teeth 6b always favorably mesh. As a result, even when the shaft core misalignment occurs between the rotation axis 11a and the rotation axis 11b, the rotation of one rotation axis 11a can be accurately transmitted to the other rotation axis 11b. Noise does not occur, and durability is increased.

Moreover, because the meshing ratio of the outer teeth 6a and the inner teeth 6b is one or more, the outer teeth 6a and the inner teeth 6b always favorably mesh with more certainty. As a result, rotation transmission can be performed without rotation unevenness. Rotation transmission torque can also be increased.

To perform a smooth rotation transmission while maintaining strength of the outer teeth 6a and the inner teeth 6b, the number of teeth of the outer teeth 6a and the inner teeth 6b can be six teeth to eight teeth.

To more appropriately perform a smooth rotation transmission when an angular misalignment is present, crowning can be performed on the involuted tooth profile. Alternatively, a circular-arc gear or a tapered gear form can be used.

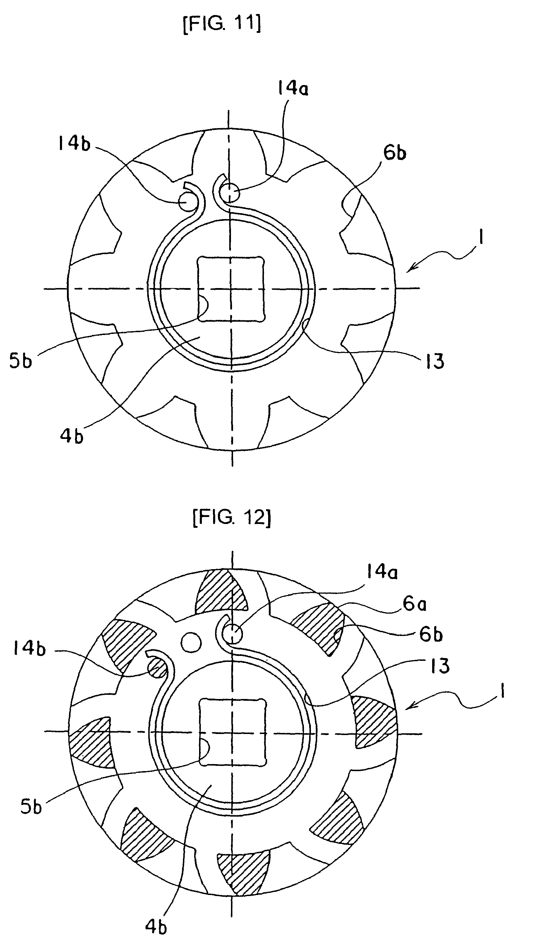

As shown in Fig. 11 and Fig. 12, according to a fourth embodiment, an arc-shaped spring 13 can be mounted between a pin 14a and a pin 14b to allow the outer teeth 6a of the joint half 2a and the inner teeth 6b of the joint half 2b of the rotary shaft coupling 1 to always mesh. The pin 14a projects from the main body 3a of the joint half 2a. The pin 14b projects from the main body 3b of the joint half 2b. A force rotating the main body 3a and the main body 3b in mutually opposite directions is applied by elasticity of the spring 13. As a result, the outer teeth 6a and the inner teeth 6b always mesh at tooth flanks on one side in the circumferential direction.

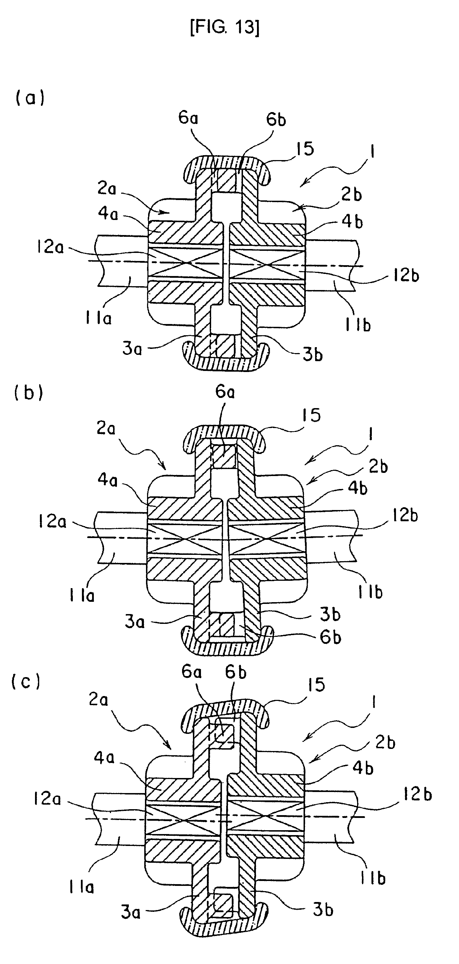

In Fig. 13, as a fifth embodiment, a rubber cover 15 having a flat cross-section is attached to outer circumferential sections of the main body 3a of the joint half 2a and the main body 3b of the joint half 2b of the rotary shaft coupling 1. The rubber cover 15 serves as a type of ring-shaped elastic component. When the rotation axis 11a and the rotation axis 11b are in a concentric state shown in Fig. 13(a), an angular misalignment state shown in Fig. 13(b), and an axial misalignment state shown in Fig. 13(c), the rubber cover 15 elastically deforms and covers the outer circumferential sections of the main body 3a and the main body 3b. Moreover, because of elasticity of the rubber cover 15 that works in the circumferential direction, movement that rotates the main body 3a and the main body 3b in mutually opposite directions can be prevented. As a result, the outer teeth 6a and the inner teeth 6b always mesh at the tooth flanks on one side in the circumferential direction. Moreover, the rubber cover 15 seals the outer circumferential sections of the main body 3a and the main body 3b, forming an air-tight space. Therefore, dust-control of the outer teeth 6a section and the inner teeth 6b section can be achieved. Noise can be blocked, and sound-proofing can be achieved. Furthermore, the air-tight space can be filled with grease (not shown), thereby making rotation transmission smoother and preventing wear in the outer teeth 6a and the inner teeth 6b. The rubber cover 15 can prevent the grease from spattering.

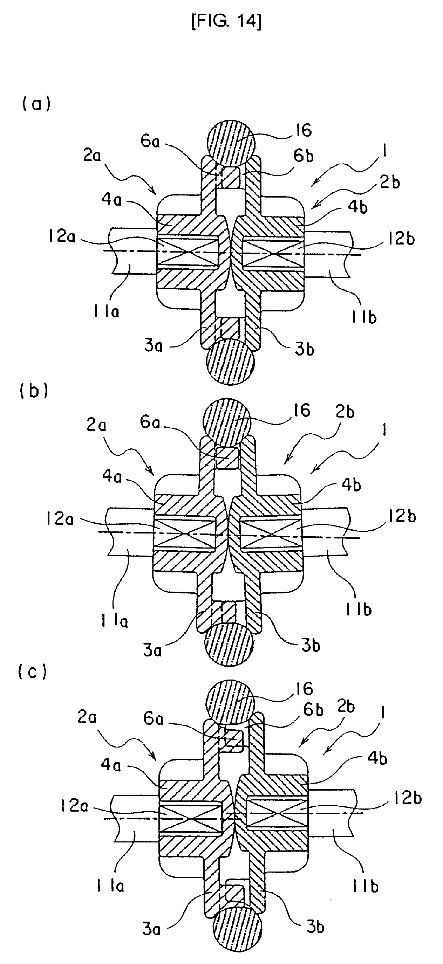

As shown in Fig. 14, according to a sixth embodiment, a rubber O-ring 16 can be attached to the outer circumferential sections of the main body 3a and the main body 3b instead of the rubber cover 15. When the O-ring 16 is used, a commercially-available, general-purpose O-ring can be used, thereby lowering costs.

Moreover, as shown in Fig. 14, spherical tip sections of opposing sections of the boss section 4a of the joint half 2a and the boss section 4b of the joint half 2b can be formed into a pouch-like shape, allowing the spherical tip surfaces to come into contact with each other. As a result, noise caused by contact between the joint half 2a and the joint half 2b can be effectively prevented.

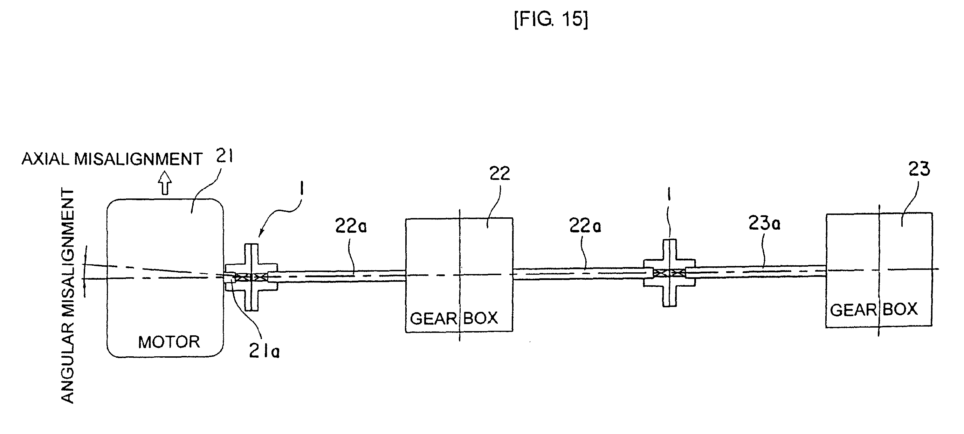

In the rotary shaft coupling 1 according to the embodiment, rotation can be very successfully transmitted even when the shaft core misalignment occurs between the rotation axis 11a and the rotation axis 11b. Therefore, a number of conventional rotary shaft couplings can be reduced and an overall configuration of a rotation transmitting system can be made more compact. In the rotary shaft coupling 1 according to the embodiment, as shown in Fig. 15, an output axis 21a, an output axis 22a, and an output axis 23a can each be directly connected between a motor 21 and a gear box 22 and between the gear box 22 and a gear box 23 by a single rotary shaft coupling 1. Therefore, a number of conventional rotary shaft couplings 25 can be reduced and an overall configuration of a rotation transmitting system can be made more compact.

The present invention is not limited to the above-described embodiments. Various modifications can be made as required.

## Claims

1. A rotary shaft coupling including a pair of joint halves that are respectively attached to opposing axial end sections and transmit rotation of one axis to another axis, the rotary shaft coupling wherein:
outer teeth of a gear are provided on one joint half, and inner teeth that mesh with the outer teeth and have a same number of teeth as the outer teeth are provided on the other joint half, and
the outer teeth and the inner teeth are formed to absorb shaft core misalignment between both axes and perform rotation transmission by having an involuted tooth profile of a same module and a tooth flank of the involuted tooth profile displaced in either one of a tangential line direction and a radial direction, or both.

2. The rotary shaft coupling according to claim 1, wherein the shaft core misalignment is one of an axial misalignment in a parallel direction of axial centers of both axes and angular misalignment in a relative angular direction of the axial centers of both axes, or both.

3. The rotary shaft coupling according to claim 1 or 2, wherein a meshing ratio between the outer teeth and the inner teeth is one or more.

4. The rotary shaft coupling according to any one of claims 1 to 3, wherein a number of teeth of the outer teeth and the inner teeth are six teeth to eight teeth.

5. The rotary shaft coupling according to any one of claims 1 to 4, wherein a spring is attached that applied elastic force rotating the both joint halves in opposite directions.

6. The rotary shaft coupling according to any one of claims 1 to 4, wherein a ring-shaped elastic body is attached to outer circumferential surfaces of the outer teeth and the inner teeth.

7. The rotary shaft coupling according to claim 6, wherein the ring-shaped elastic body is a rubber cover sealing an outer circumferential section of a meshing section of the pair of joint halves or an O-ring.

8. The rotary shaft coupling according to claim 7, wherein an air-tight space formed on an inner side of the rubber cover is filled with grease.
